# EUROPÄISCHE PATENTSCHRIFT

(11) **EP 3 871 852 B1**
(45) Veröffentlichungstag und Bekanntmachung des Hinweises auf die Patenterteilung: **11.10.2023**
(21) Anmeldenummer: 21156165.9
(22) Anmeldetag: 10.02.2021
(51) Int. Cl.: B29B 9/06, B26D 1/28, B29C 48/00, B29C 48/34

(54) **MESSERKOPF ZUR GRANULIERUNG VON MATERIALSTRÄNGEN SOWIE GRANULIERVORRICHTUNG MIT EINEM DERARTIGEN MESSERKOPF UND VERFAHREN ZUR MONTAGE EINES DERARTIGEN MESSERKOPFS**
CUTTER HEAD FOR GRANULATING MATERIAL STRANDS AND GRANULATING DEVICE COMPRISING SUCH A CUTTER HEAD AND METHOD FOR MOUNTING SUCH A CUTTER HEAD
TÊTE DE LAME DESTINÉE À LA GRANULATION DES BRINS DE MATIÈRE, AINSI QUE DISPOSITIF DE GRANULATION DOTÉ D'UNE TELLE TÊTE DE LAME ET PROCÉDÉ DE MONTAGE D'UNE TÊTE DE LAME

(30) Priorität: 25.02.2020 DE 102020202402
(43) Veröffentlichungstag der Anmeldung: 01.09.2021
(73) Patentinhaber: Coperion GmbH, 70469 Stuttgart (DE)
(72) Erfinder: Klein, Christoph, 73257 Köngen (DE); Rudi, Oleg, 74321 Bietigheim-Bissingen (DE); Vlasova, Tatiana, 71701 Schwieberdingen (DE); Schweikle, Jürgen Alexander, 74172 Neckarsulm (DE); Hölzel, Maria, 71735 Eberdingen (DE); Breuer, Maximilian, 70714 Stuttgart (DE)
(74) Vertreter: Rau, Schneck & Hübner Patentanwälte Rechtsanwälte PartGmbB

(56) Entgegenhaltungen:
- EP-A1- 1 060 857
- EP-A1- 3 501 773
- EP-A2- 0 174 630
- CN-A- 101 966 708
- DE-A1- 3 126 550
- DE-A1-102004 020 898
- US-A- 3 792 950
- US-A- 4 800 792

## Beschreibung

Die Erfindung betrifft einen Messerkopf zur Granulierung von Materialsträngen sowie eine Granuliervorrichtung mit einem derartigen Messerkopf und ein Verfahren zur Montage eines derartigen Messerkopfs. Ferner betrifft die Erfindung eine Montagevorrichtung zur Vormontage eines Granuliermessers und eines Positionierbauteils.

Aus der EP 3 501 773 A1 ist eine Granuliervorrichtung zur Granulierung von Materialsträngen bekannt, die eine Lochplatte und einen Messerkopf umfasst. Der Messerkopf weist mehrere Granuliermesser auf, die an zugehörigen Messerarmen befestigt sind. Zur Montage wird das jeweilige Granuliermesser zwischen dem zugehörigen Messerarm und einem Verstellelement mittels Schrauben geklemmt. Das Verstellelement und somit das zugehörige Granuliermesser werden mittels Verstellschrauben grob positioniert und anschließend mittels der Schrauben fixiert. Mit Hilfe von Gewindestiften kann das Granuliermesser anschließend justiert werden.

Aus der EP 0 174 630 A2 ist eine Granuliervorrichtung mit einer Lochplatte und einem scheibenförmigen Messerträger bekannt. In dem scheibenförmigen Messerträger sind Kolben geführt angeordnet, die mittels Federn vorgespannt sind. An jeweiligen der Lochplatte zugewandten Enden der Kolben sind Granuliermesser befestigt, die mittels der Federn gegen die Lochplatte gedrückt werden.

Aus der EP 1 060 857 A1 ist eine Granuliervorrichtung mit einer Lochplatte und einem Messerträger mit daran angeordneten Granuliermessern bekannt. Das jeweilige Granuliermesser ist in einer Gleitführung angeordnet und an Stellschrauben abgestützt, sodass das Granuliermesser um seine Längsachse verschwenkbar ist. Die Gleitführung ist über vorgespannte Schwenkzapfen an dem Messerträger gelagert, sodass das jeweilige Granuliermesser gegen die Lochplatte gedrückt wird.

Aus der DE 10 2004 020 898 A1 ist eine Granuliereinrichtung mit einer Lochplatte, einem Messerhalter und daran befestigten Messern bekannt. Die Messer sind mittels Schrauben an dem Messerhalter befestigt. Mittels Drucksensoren werden Druckspannungen an den einzelnen Messern gemessen. Zusätzlich können Piezoaktoren zwischen den Messern und dem Messerhalter angeordnet sein, um ein gleichmäßiges Belastungsprofil zu gewährleisten.

Aus der US 3 792 950 A, der DE 31 26 550 A1, der US 4 800 792 A und der CN 101 966 708 A sind weitere Messerköpfe mit Granuliermessern für Granuliereinrichtungen bekannt.

Der Erfindung liegt die Aufgabe zugrunde, einen Messerkopf zur Granulierung von Materialsträngen zu schaffen, der eine einfache, bedienerfreundliche und exakte Montage und Einstellung eines Granuliermessers ermöglicht.

Diese Aufgabe wird durch einen Messerkopf mit den Merkmalen des Anspruchs 1 gelöst. Das jeweilige Granuliermesser wird an dem zugehörigen Positionierbauteil vormontiert, so dass das jeweilige Granuliermesser an dem zugehörigen Positionierbauteil befestigt ist. Anschließend wird das jeweilige Positionierbauteil mit dem befestigten Granuliermesser derart an dem Messerträger bzw. einem Messerarm befestigt, dass das jeweilige Positionierbauteil gegen den Messerträger bzw. den Messerarm anliegt und das Granuliermesser grob positioniert ist. Dadurch, dass das jeweilige Granuliermesser an dem zugehörigen Positionierbauteil befestigt ist, kann das Granuliermesser durch Befestigen des Positionierbauteils in einfacher und bedienerfreundlicher Weise an dem Messerträger bzw. einem Messerarm befestigt werden. Das Granuliermesser wird anschließend mittels des mindestens einen Justierelements justiert bzw. exakt positioniert, so dass das jeweilige Granuliermesser exakt zu einer Lochplatte bzw. einer Schnittebene einer Granuliervorrichtung positioniert ist.

Das jeweilige Positionierbauteil liegt in der x-Richtung und der y-Richtung unmittelbar an dem Messerträger an, so dass das an dem Positionierbauteil befestigte Granuliermesser in der x-Richtung und der y-Richtung positioniert ist. Die x-Richtung und die y-Richtung verlaufen quer, insbesondere senkrecht zueinander. Dadurch, dass das Granuliermesser an dem zugehörigen Positionierbauteil befestigt ist, ist das Granuliermesser auch in einer z-Richtung positioniert. Die z-Richtung verläuft quer, insbesondere senkrecht, zu der x- oder der y-Richtung. Das jeweilige Granuliermesser ist in der z-Richtung vorzugsweise zwischen dem Positionierbauteil und dem Messerträger, insbesondere einem Messerarm, angeordnet. Vorzugsweise liegt das Granuliermesser gegen den Messerträger, insbesondere den Messerarm, an.

Mittels des mindestens einen verstellbaren Justierelements wird das zugehörige Granuliermesser in der z-Richtung positioniert und dessen Position eingestellt. Vorzugsweise umfasst das mindestens eine Justierelement einen Gewindeabschnitt und/oder einen Betätigungsabschnitt. Vorzugsweise sind dem jeweiligen Granuliermesser mehrere Justierelemente zugeordnet. Die Justierelemente sind im Wesentlichen parallel zu einer Schnittkante des Granuliermessers angeordnet. Die Justierelemente sind in der z-Richtung verstellbar, so dass das zugehörige Granuliermesser entlang der Schnittkante in seiner Position einstellbar ist.

Dadurch, dass das jeweilige Granuliermesser an dem zugehörigen Positionierbauteil vormontiert ist und durch das Anliegen des Positionierbauteils an dem Messerträger grob positioniert ist, ist die Montage des jeweiligen Granuliermessers, beispielsweise bei einem Granuliermesserwechsel, einfach und bedienerfreundlich. Hierdurch verringert sich die für einen Granuliermesserwechsel erforderliche Zeit und somit die Stillstandzeit der Granuliervorrichtung sowie der zugehörigen Aufbereitungsanlage. Darüber hinaus verringert sich eine Verletzungsgefahr für einen Bediener, der das jeweilige Granuliermesser montiert und einstellt, da die Aufenthaltsdauer im Bereich einer aufgeheizten Lochplatte und im Bereich des jeweiligen Granuliermessers bzw. der Messerklinge minimiert wird. Da eine Grobpositionierung des Granuliermessers bei der Vormontage mit dem zugehörigen Positionierbauteil erfolgt, muss lediglich noch die Feinpositionierung bzw. Justierung an dem am Messerträger montierten Granuliermesser durchgeführt werden. Darüber hinaus werden Schäden am Messerkopf bzw. einer Granuliervorrichtung mit dem Messerkopf aufgrund von Einstellungsfehlern verringert bzw. vermieden.

Der Messerträger und/oder das jeweilige Positionierbauteil ist aus einem Material Mi hergestellt. Das Material Mi hat bei 20 °C vorzugsweise eine Wärmeleitfähigkeit λ₁ ≥ 150 W/(m · K), insbesondere λ₁ ≥ 200 W/(m · K), und insbesondere λ₁ ≥ 250 W/(m · K). Für die Wärmeleitfähigkeit λ₁ gilt vorzugsweise: λ₁ ≤ 900 W/(m · K), insbesondere λ₁ ≤ 700 W/(m · K), und insbesondere λ₁ ≤ 500 W/(m · K).

Das Material Mi hat bei 20 °C vorzugsweise einen Wärmeausdehnungskoeffizienten α₁ ≥ 16 · 10⁻⁶ 1/K, insbesondere α₁ ≥ 18 · 10⁻⁶ 1/K, und insbesondere α₁ ≥ 21 · 10⁻⁶ 1/K. Für den Wärmeausdehnungskoeffizienten α₁ gilt vorzugsweise: α₁ ≤ 40 · 10⁻⁶ 1/K, insbesondere α₁ ≤ 35 · 10⁻⁶ 1/K, und insbesondere α₁ < 30 · 10⁻⁶ 1/K.

Das Material Mi hat vorzugsweise eine Dichte ρ₁ < 7,0 g/cm³, insbesondere ρ₁ ≤ 5,0 g/cm³, und insbesondere ρ₁ ≤ 3,0 g/cm³. Für die Dichte ρ₁ gilt vorzugsweise: ρ₁ > 0,5 g/cm³, insbesondere ρ₁ > 1,0 g/cm³, und insbesondere ρ₁ ≥ 1,5 g/cm³.

Das Material Mi umfasst vorzugsweise mindestens in Material aus der Gruppe Aluminium, Kupfer, Magnesium und Beryllium. Vorzugsweise ist das Material Mi eine Legierung mit mindestens 80 Gew.-% Aluminium.

Das jeweilige Granuliermesser ist vorzugsweise aus einem Material M₂ hergestellt. Das Material M₂ hat bei 20 °C vorzugsweise eine Wärmeleitfähigkeit λ₂ ≥ 15 W/(m · K), insbesondere λ₂ ≥ 50 W/(m · K), insbesondere λ₂ ≥ 85 W/(m · K). Für die Wärmeleitfähigkeit λ₂ gilt vorzugsweise: λ₂ ≤ 200 W/(m . K), insbesondere λ₂ ≤ 160 W/(m · K), und insbesondere λ₂ ≤ 120 W/(m · K).

Das Material M₂ hat bei 20 °C vorzugsweise einen Wärmeausdehnungskoeffizienten α₂ ≤ 11 · 10⁻⁶ 1/K, insbesondere α₂ < 9,0 · 10⁻⁶ 1/K, und insbesondere α₂ ≤ 7,0 · 10⁻⁶ 1/K. Für den Wärmeausdehnungskoeffizienten α₂ gilt vorzugsweise: α₂ > 1,0 · 10⁻⁶ 1/K, insbesondere α₂ > 2,0 · 10⁻⁶ 1/K und insbesondere α₂ > 3,0 · 10⁻⁶ 1/K.

Das Material M₂ hat vorzugsweise eine Dichte ρ₂ ≥ 3,0 g/cm³, insbesondere ρ₂ ≥ 5,0 g/cm³, und insbesondere ρ₂ ≥ 7,0 g/cm³. Für die Dichte ρ₂ gilt vorzugsweise: ρ₂ ≤ 30 g/cm³, insbesondere ρ₂ < 25 g/cm³, und insbesondere ρ₂ ≤ 20 g/cm³.

Durch das Material Mi und/oder durch das Material M₂ wird eine hohe Schnittqualität erzielt, da die aufgrund des Schneidens erzeugte Wärme vergleichsweise besser von dem jeweiligen Granuliermesser abgeleitet und über den Messerträger verteilt wird, so dass ein Temperaturgradient und thermische Verformungen reduziert werden. Durch das Material M₂ wird die Plananlage des jeweiligen Granuliermessers an einer Lochplatte und somit die Schnittqualität verbessert.

Ein Messerkopf nach Anspruch 2 gewährleistet eine einfache, bedienerfreundliche und exakte Montage und Einstellung eines Granuliermessers. Der Aufnahmeraum ist insbesondere an einer der Schnittebene bzw. der Lochplatte abgewandten Seite des Messerträgers ausgebildet. Der jeweilige Aufnahmeraum dient zum Aufnehmen des zugehörigen Positionierbauteils und vorzugsweise des daran befestigten Granuliermessers. Der Messerträger begrenzt den jeweiligen Aufnahmeraum an mindestens drei Seiten. Der jeweilige Aufnahmeraum ist als Vertiefung in dem Messerträger bzw. einem jeweiligen Messerarm ausgebildet.

Ein Messerkopf nach Anspruch 3 gewährleistet eine einfache, bedienerfreundliche und exakte Montage und Einstellung eines Granuliermessers. Der jeweilige Aufnahmeraum wird durch drei paarweise quer zueinander verlaufende, insbesondere paarweise senkrecht zueinander verlaufende Anschläge teilweise begrenzt. Durch die Anschläge ist das jeweilige Positionierbauteil und das daran befestigte Granuliermesser in einer x-Richtung, einer y-Richtung und einer z-Richtung positioniert. Die x-Richtung, die y-Richtung und die z-Richtung verlaufen insbesondere paarweise senkrecht zueinander und bilden ein kartesisches Koordinatensystem für das jeweilige Granuliermesser bzw. Positionierbauteil. Die den Positionierbauteilen bzw. den Aufnahmeräumen zugeordneten kartesischen Koordinatensysteme sind insbesondere durch eine Drehung des Messerkopfs um eine Drehachse ineinander überführbar.

Ein Messerkopf nach Anspruch 4 gewährleistet eine einfache, bedienerfreundliche und exakte Montage und Einstellung eines Granuliermessers. Dadurch, dass das mindestens eine Justierelement verstellbar an dem jeweiligen Positionierbauteil befestigt ist, kann das mindestens eine Justierelement zusammen mit dem Positionierbauteil und dem Granuliermesser vormontiert und anschließend an dem Messerträger bzw. einem Messerarm befestigt werden. Nach der Grobpositionierung des Granuliermessers durch das Befestigen des Positionierbauteils an dem Messerträger kann das mindestens eine Justierelement zur Feinpositionierung bzw. exakten Positionierung des Granuliermessers in einfacher Weise verstellt werden. Vorzugsweise sind an dem jeweiligen Positionierbauteil mehrere Justierelemente verstellbar befestigt. Die Justierelemente sind im Wesentlichen parallel zu einer Schnittkante des Granuliermessers angeordnet. Hierdurch kann das Granuliermesser entlang der Schnittkante durch Verstellen der Justierelemente exakt positioniert werden. Das mindestens eine Justierelement ist vorzugsweise derart an dem jeweiligen Positionierbauteil befestigt, dass das mindestens eine Justierelement an einer dem Granuliermesser bzw. einer Schnittebene bzw. einer Lochplatte abgewandten Seite des Positionierbauteils verstellbar ist.

Ein Messerkopf nach Anspruch 5 gewährleistet eine einfache, bedienerfreundliche und exakte Montage und Einstellung eines Granuliermessers. Die mindestens zwei Fixierelemente sind beispielsweise als Schrauben ausgebildet. Die mindestens zwei Fixierelemente werden zur Vormontage des jeweiligen Granuliermessers und des zugehörigen Positionierbauteils durch die mindestens zwei Fixierdurchgangsöffnungen des jeweiligen Granuliermessers geführt und an dem Positionierbauteil befestigt. Das Befestigen erfolgt insbesondere durch Verschrauben. Die mindestens zwei Fixierdurchgangsöffnungen sind insbesondere länglich ausgebildet. Die mindestens zwei Fixierdurchgangsöffnungen sind beispielsweise als Langlöcher ausgebildet. Mittels der mindestens zwei Fixierelemente und den zugehörigen mindestens zwei Fixierdurchgangsöffnungen kann das jeweilige Granuliermesser in der gewünschten Position an dem Positionierbauteil befestigt werden.

Ein Messerkopf nach Anspruch 6 gewährleistet eine einfache, bedienerfreundliche und exakte Montage und Einstellung eines Granuliermessers. Dadurch, dass das jeweilige Granuliermesser zwischen dem Messerträger bzw. einem Messerarm und dem zugehörigen Positionierbauteil angeordnet ist, ist das Positionierbauteil an einer Seite, die der Schnittebene bzw. der Lochplatte abgewandt ist, frei zugänglich. Hierdurch kann das Positionierbauteil in einfacher Weise an dem Messerträger bzw. einem Messerarm befestigt werden. Darüber hinaus ist das mindestens eine Justierelement einfach zugänglich, wenn dieses verstellbar an dem Positionierbauteil befestigt ist. Das jeweilige Granuliermesser kann in einfacher Weise zwischen dem Messerträger und dem Positionierbauteil befestigt, insbesondere geklemmt, werden.

Ein Messerkopf nach Anspruch 7 gewährleistet eine einfache, bedienerfreundliche und exakte Montage und Einstellung eines Granuliermessers. Mittels der mindestens zwei Fixierelemente ist das jeweilige Granuliermesser an dem zugehörigen Positionierbauteil befestigt. Die mindestens zwei Fixierelemente sind beispielsweise als Schrauben ausgebildet. Mittels der mindestens zwei Fixierelemente werden das jeweilige Granuliermesser und das zugehörige Positionierbauteil vormontiert. Anschließend wird das jeweilige Positionierbauteil und das daran befestigte Granuliermesser derart an dem Messerträger bzw. einem Messerarm befestigt, dass das Granuliermesser zwischen dem Messerträger bzw. einem Messerarm und dem Positionierbauteil angeordnet ist. Der über das jeweilige Granuliermesser hinausstehende Teil der mindestens zwei Fixierelemente ist hierbei in der mindestens einen Vertiefung aufgenommen, so dass das jeweilige Granuliermesser unmittelbar gegen den Messerträger bzw. einem Messerarm anliegt. Die mindestens eine Vertiefung ist beispielsweise länglich ausgebildet, so dass die mindestens zwei Fixierelemente in einer Vertiefung aufgenommen werden können. Weiterhin kann für jedes der Fixierelemente eine eigene Vertiefung vorgesehen sein, so dass der Messerträger bzw. ein jeweiliger Messerarm mindestens zwei Vertiefungen aufweist.

Ein Messerkopf nach Anspruch 8 gewährleistet eine einfache, bedienerfreundliche und exakte Montage und Einstellung eines Granuliermessers. Das jeweilige Positionierbauteil ist an dem Messerträger bzw. einem Messerarm befestigt, so dass das zugehörige Granuliermesser grob positioniert ist. Das jeweilige Positionierbauteil wird vorzugsweise im Bereich eines Aufnahmeraums für das Positionierelement und/oder außerhalb eines Aufnahmeraums befestigt, beispielsweise verschraubt. Vorzugsweise ist ein Befestigungsbauteil an dem jeweiligen Positionierbauteil befestigt, das wiederum an dem Messerträger bzw. einem Messerarm befestigt ist. Das Befestigungsbauteil bildet insbesondere Durchgangsöffnungen aus, durch die Fixierelemente, wie beispielsweise Fixierschrauben, geführt sind. Die Fixierelemente sind im Bereich des Aufnahmeraums und/oder außerhalb des Aufnahmeraums an dem Messerträger bzw. einem Messerarm befestigt, insbesondere verschraubt. Im Bereich des Aufnahmeraums erfolgt die Befestigung insbesondere an dem dritten Anschlag. Das jeweilige Granuliermesser liegt gegen den dritten Anschlag an.

Ein Messerkopf nach Anspruch 9 gewährleistet eine einfache, bedienerfreundliche und exakte Montage und Einstellung eines Granuliermessers. Das jeweilige Positionierbauteil und das zugehörige Befestigungsbauteil werden bei der Vormontage miteinander befestigt. Aufgrund der Vormontage sind somit das jeweilige Granuliermesser, das zugehörige Positionierbauteil und das zugehörige Befestigungsbauteil aneinander befestigt. Mittels Fixierelementen wird das Befestigungsbauteil anschließend an dem Messerträger bzw. einem Messerarm befestigt. Hierzu weist das zugehörige Positionierbauteil und/oder das zugehörige Granuliermesser Durchgangsöffnungen für die Fixierelemente auf. Das Befestigungsbauteil ist insbesondere gegenüberliegend zu dem Granuliermesser an dem Positionierbauteil befestigt. Das Befestigungsbauteil ist insbesondere an einer Seite des Positionierbauteils befestigt, die einer Schnittebene bzw. einer Lochplatte abgewandt ist. Hierdurch ist ein einfaches Befestigen des Befestigungsbauteils mittels der Fixierelemente möglich. Das Befestigungsbauteil ist vorzugsweise aus dem Material Mi hergestellt.

Ein Messerkopf nach Anspruch 10 gewährleistet eine einfache, bedienerfreundliche und exakte Montage und Einstellung eines Granuliermessers. Der Messerträger umfasst mindestens zwei Messerarme, vorzugsweise mindestens drei Messerarme, die insbesondere drehsymmetrisch mit einem Winkel von 360° dividiert durch die Anzahl der Messerarme um die Drehachse des Messerträgers angeordnet sind. Die mindestens zwei Messerarme erstrecken sich ausgehend von einem zentralen Lagerabschnitt, der die Ausbildung einer Drehachse ermöglicht, in einer radialen Richtung. Der Lagerabschnitt ist beispielsweise als Nabe ausgebildet. Durch die mindestens zwei Messerarme und das jeweilige daran befestigte Granuliermesser werden die Materialstränge bei einer Umdrehung des Messerträgers entsprechend der Anzahl der Granuliermesser geschnitten. Die mindestens zwei Messerarme und der Lagerabschnitt sind insbesondere einteilig miteinander ausgebildet. Vorzugsweise ist an jedem Messerarm ein Granuliermesser befestigt. Der jeweilige Messerarm bildet einen Aufnahmeraum zum Aufnehmen des zugehörigen Positionierbauteils und des zugehörigen Granuliermessers aus.

Der Erfindung liegt ferner die Aufgabe zugrunde, eine Granuliervorrichtung zur Granulierung von Materialsträngen zu schaffen, die eine einfache, bedienerfreundliche und exakte Montage und Einstellung eines Granuliermessers ermöglicht.

Diese Aufgabe wird durch eine Granuliervorrichtung mit den Merkmalen des Anspruchs 11 gelöst. Die Vorteile der erfindungsgemäßen Granuliervorrichtung entsprechen den bereits beschriebenen Vorteilen des erfindungsgemäßen Messerkopfs. Die Granuliervorrichtung dient insbesondere zur Granulierung von Kunststoff-Materialsträngen, die aus einer Kunststoffschmelze erzeugt werden. Die Drehachse des Messerkopfs ist konzentrisch oder exzentrisch zu der Lochplatte angeordnet. Die Granuliervorrichtung ist beispielsweise als Heißgranuliervorrichtung ausgebildet, bei der der Schnitt von Granulat trocken erfolgt, oder als Unterwassergranuliervorrichtung.

Der Erfindung liegt ferner die Aufgabe zugrunde, ein Verfahren zu schaffen, das eine einfache, bedienerfreundliche und exakte Montage eines derartigen erfindungsgemässen Messerkopfs ermöglicht.

Diese Aufgabe wird durch ein Verfahren mit den Merkmalen des Anspruchs 12 gelöst. Die Vorteile des erfindungsgemäßen Verfahrens entsprechen den bereits beschriebenen Vorteilen des erfindungsgemäßen Messerkopfs. Das jeweilige Granuliermesser und das zugehörige Positionierbauteil werden zunächst vormontiert und anschließend an dem Messerträger bzw. einem Messerarm derart befestigt, dass das Granuliermesser relativ zu dem Messerträger bzw. einem Messerarm eine erste Position einnimmt. Durch das Befestigen des Positionierbauteils erfolgt eine Grobpositionierung des Granuliermessers. Anschließend wird das grobpositionierte Granuliermesser mittels des mindestens einen Justierelements justiert bzw. exakt eingestellt, so dass das Granuliermesser relativ zu dem Messerträger bzw. einem Messerarm eine zweite Position einnimmt. Die zweite Position ist insbesondere durch eine Schnittebene bestimmt, in der die Schnittkante des Granuliermessers bzw. sämtlicher Granuliermesser positioniert sein muss.

Vorzugsweise wird bei der Vormontage ein Befestigungsbauteil an dem Positionierbauteil befestigt und/oder Fixierelemente zum Befestigen des Positionierbauteils und/oder des Befestigungsbauteils an dem Positionierbauteil und/oder an dem Befestigungsbauteil verliersicher angeordnet. Das mindestens eine Justierelement ist vorzugsweise verstellbar an dem Positionierbauteil befestigt. Das Granuliermesser, das Positionierbauteil, das mindestens eine Justierelement, das Befestigungsbauteil und die Fixierelemente bilden vorzugsweise eine vormontierte Messereinheit. Die vormontierte Messereinheit wird anschließend mittels der Fixierelemente an dem Messerträger bzw. einem Messerarm befestigt, so dass das Granuliermesser die erste Position einnimmt. Die Vormontage erfolgt insbesondere mittels einer Montagevorrichtung.

Zur Vormontage eines Granuliermessers und eines Positionierbauteils dient eine Montagevorrichtung. Die Montagevorrichtung umfasst mindestens zwei Montageanschläge zum Anordnen des Positionierbauteils und des Granuliermessers in einer definierten Position zueinander. Die Montagevorrichtung ermöglicht eine einfache, bedienerfreundliche und exakte Vormontage eines Granuliermessers und eines Positionierbauteils. Mittels der mindestens zwei Montageanschläge werden das Positionierbauteil und das zugehörige Granuliermesser in einer definierten Position zueinander positioniert, so dass das Positionierbauteil und das Granuliermesser in dieser Position miteinander verbunden werden können. Die mindestens zwei Montageanschläge verlaufen vorzugsweise in einem spitzen Winkel zueinander. Vorzugsweise dienen zwei Montageanschläge zum Anordnen des Positionierbauteils in einer definierten Position in der Montagevorrichtung, wobei einer der Montageanschläge zum Anordnen des Granuliermessers auf dem Positionierbauteil in einer definierten Position dient. Mindestens einer der Montageanschläge ist vorzugsweise einstellbar. Die mindestens zwei Montageanschläge werden beispielsweise durch einen Grundkörper und/oder mindestens ein in dem Grundkörper angeordnetes und verstellbares Anschlagelement, beispielsweise eine Verstellschraube, ausgebildet. Vorzugsweise weist die Montagevorrichtung mindestens einen weiteren Anschlag zum Anordnen des Granuliermessers in der definierten Position auf. Der Grundkörper der Montagevorrichtung bildet vorzugsweise mindestens eine Ausnehmung zur Aufnahme von mindestens einem Justierelement und/oder mindestens einem Fixierelement und/oder einem Befestigungsbauteil aus.

Weitere Merkmale, Vorteile und Einzelheiten der Erfindung ergeben sich aus der nachfolgenden Beschreibung eines Ausführungsbeispiels. Es zeigen:
- Fig. 1: eine schematische Darstellung einer Granuliervorrichtung mit einer geöffneten Granulierhaube zur Veranschaulichung eines exzentrisch zu einer Lochplatte angeordneten Messerkopfs,

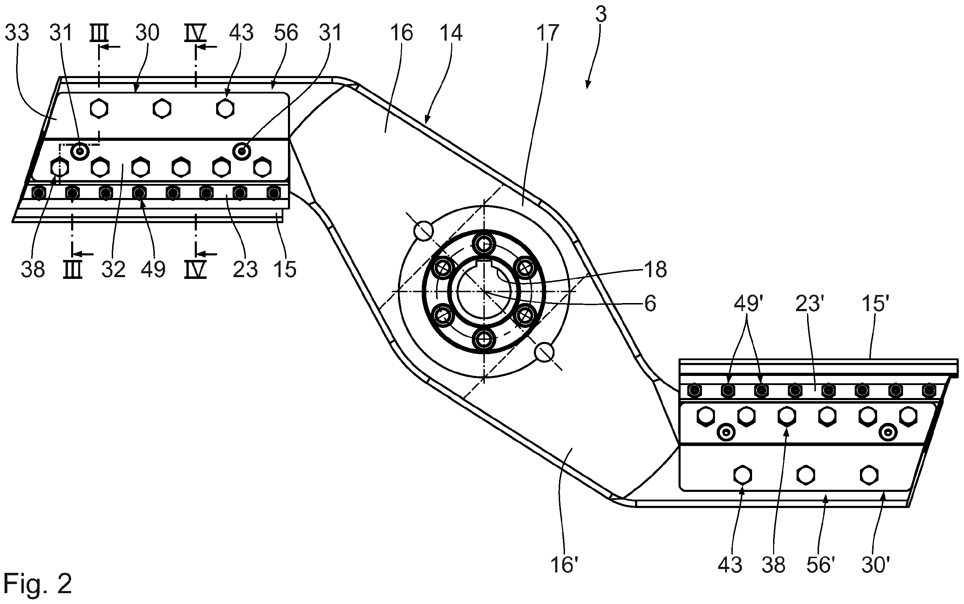

- Fig. 2: eine Draufsicht auf den Messerkopf mit einem Messerträger und daran befestigten Granuliermessern,

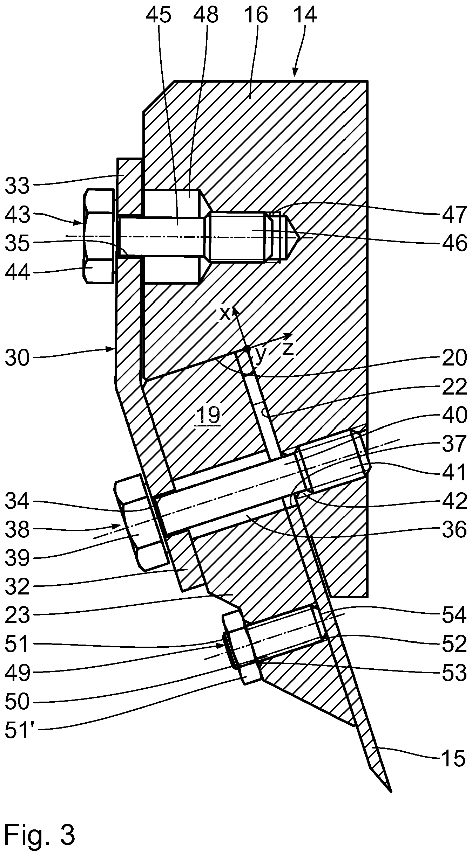

- Fig. 3: eine Schnittdarstellung durch den Messerträger und ein Granuliermesser entlang der Schnittlinie III-III in Fig. 2,
- Fig. 4: eine Schnittdarstellung durch den Messerträger und ein Granuliermesser entlang der Schnittlinie IV-IV in Fig. 2,

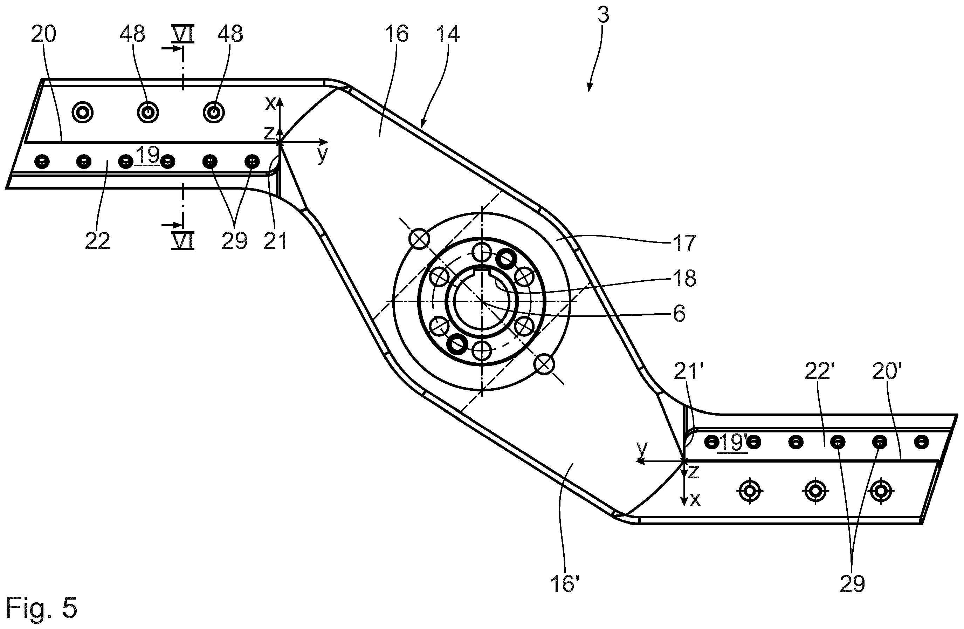

- Fig. 5: eine Draufsicht auf den Messerträger in Fig. 2 ohne die Granuliermesser,

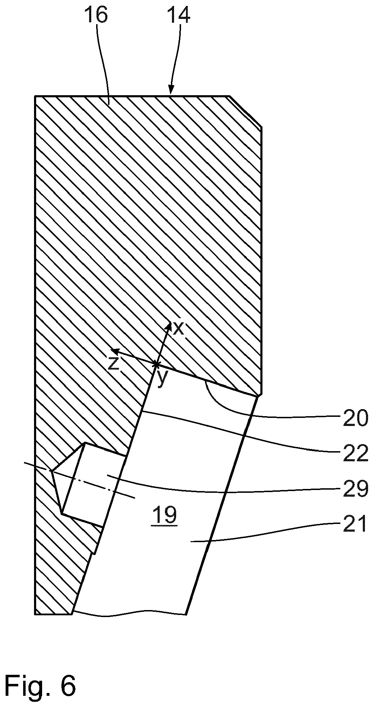

- Fig. 6: eine Schnittdarstellung durch den Messerträger entlang der Schnittlinie VI-VI in Fig. 5,

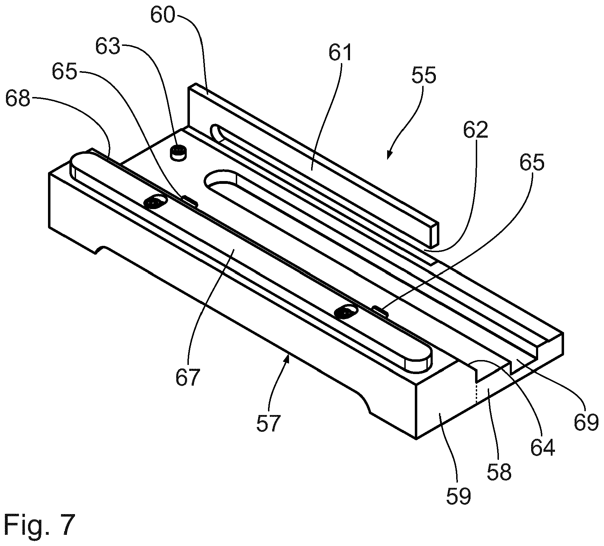

- Fig. 7: eine isometrische Ansicht einer Montagevorrichtung zur Vormontage eines Granuliermessers an einem Positionierbauteil,

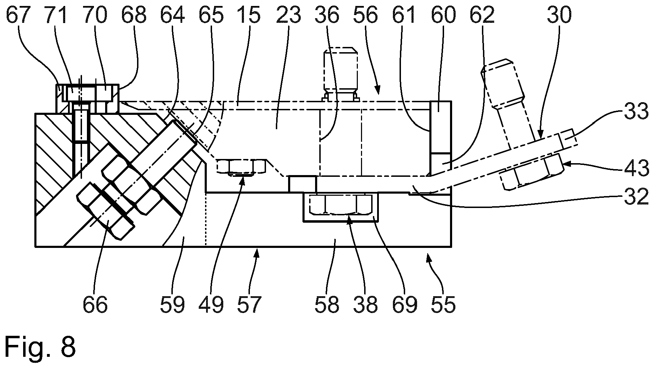

- Fig. 8: eine teilweise ausgebrochene Darstellung der Montagevorrichtung und einer vormontierte Messereinheit umfassend das Granuliermesser und das Positionierbauteil, und

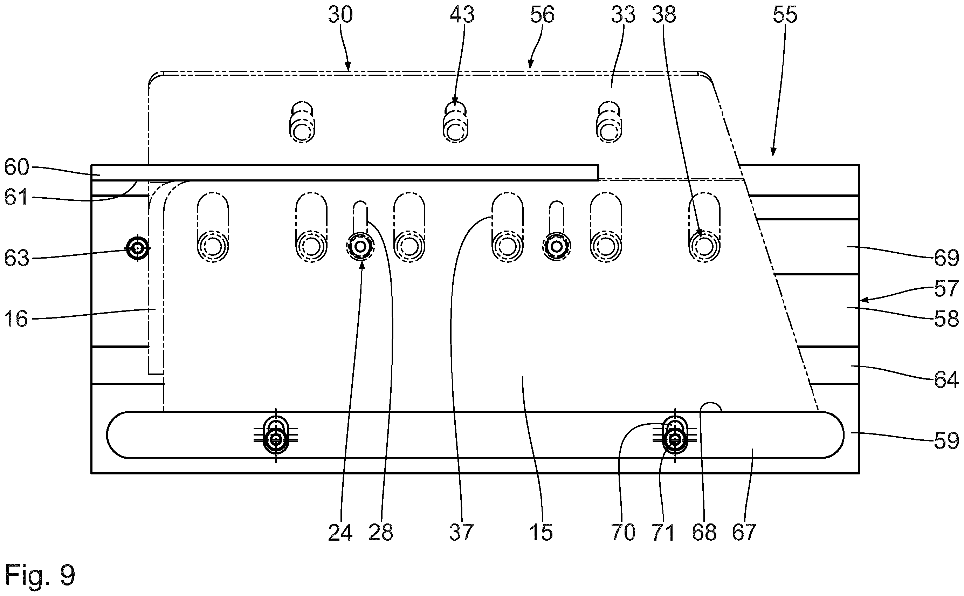

- Fig. 9: eine Draufsicht auf die Montagevorrichtung und die vormontierte Messereinheit in Fig. 8.

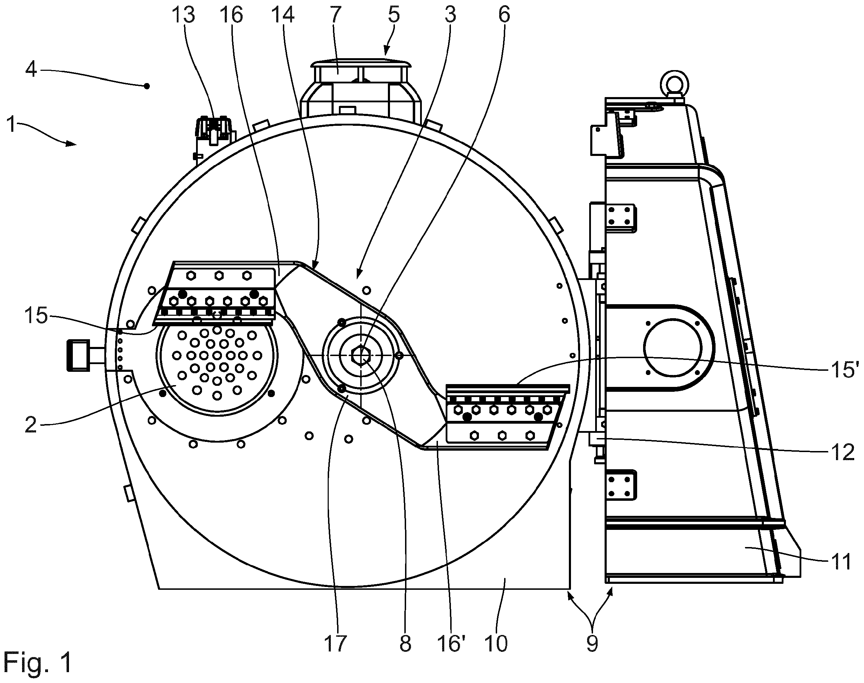

Eine in Fig. 1 dargestellte Granuliervorrichtung 1 umfasst eine Lochplatte 2 zum Erzeugen von Materialsträngen und einen Messerkopf 3 zum Erzeugen von Granulat aus den Materialsträngen. Der Messerkopf 3 ist in einer Förderrichtung 4 der Materialschmelze stromabwärts zu der Lochplatte 2 angeordnet.

Der Messerkopf 3 ist mittels einer Antriebseinrichtung 5 um eine Drehachse 6 drehantreibbar. Die Antriebseinrichtung 5 umfasst einen elektrischen Antriebsmotor 7, der über ein nicht näher dargestelltes Winkelgetriebe mit einer Antriebswelle 8 verbunden ist. Der Messerkopf 3 ist mit der Antriebswelle 8 drehfest verbunden. Die Drehachse 6 ist exzentrisch zu der Lochplatte 2 angeordnet.

Die Granuliervorrichtung 1 umfasst eine Granulierhaube 9 mit einem ersten Granulierhaubenteil 10 und einem zweiten Granulierhaubenteil 11. Die Granulierhaubenteile 10, 11 sind mittels eines Scharniers 12 schwenkbar verbunden und mittels einer Verrieglungseinrichtung 13 im geschlossenen Zustand verriegelbar. Die Lochplatte 2, der Messerkopf 3 und die Antriebseinrichtung 5 sind über das erste Granulierhaubenteil 10 gelagert. Seitlich an dem ersten Granulierhaubenteil 10 ist eine Heizung zum Beheizen der Lochplatte 2 angeordnet. An einer Unterseite weist das zweite Granulierhaubenteil 11 eine Öffnung auf, so dass das geschnittene Granulat aus der Granulierhaube 9 fallen und abtransportiert werden kann.

Die Granuliervorrichtung 1 ist beispielsweise einem Extruder nachgeordnet, der die Materialschmelze erzeugt. Die Materialschmelze ist beispielsweise eine Kunststoffschmelze. Die Granuliervorrichtung 1 ist beispielsweise über ein nicht näher dargestelltes Granulierkopfgehäuse mit dem Extruder verbunden, so dass die Materialschmelze der Lochplatte 2 zugeführt wird.

Der Messerkopf 3 umfasst einen Messerträger 14, an dem Granuliermesser 15, 15' befestigt sind. Der Messerträger 14 weist hierzu Messerarme 16, 16' auf, die sich ausgehend von einem Lagerabschnitt 17 radial zu der Drehachse 6 erstrecken. Die Messerarme 16, 16' sind einteilig mit dem Lagerabschnitt 17 ausgebildet. Die Messerarme 16, 16' sind rotationssymmetrisch um die Drehachse 6 angeordnet. Der Lagerabschnitt 17 ist als Nabe ausgebildet und weist eine Aufnahmebohrung 18 zur Aufnahme und drehfesten Befestigung der Antriebswelle 8 auf. Der Lagerabschnitt 17 ist somit konzentrisch zu der Drehachse 6 angeordnet und drehfest mit der Antriebswelle 8 verbunden. An jedem der Messerarme 16, 16' ist an einem dem Lagerabschnitt 17 abgewandten Ende eines der Granuliermesser 15, 15' befestigt.

Nachfolgend ist die Befestigung des Granuliermessers 15 an dem Messerarm 16 bzw. dem Messerträger 14 im Detail beschrieben. Der Messerarm 16 bildet an dem dem Lagerabschnitt 17 abgewandten Ende einen Aufnahmeraum 19 aus. Der Aufnahmeraum 19 ist von dem Messerarm 16 an drei Seiten begrenzt, so dass der Messerarm 16 einen ersten Anschlag 20, einen zweiten Anschlag 21 und einen dritten Anschlag 22 ausbildet. Der Aufnahmeraum 19 ist somit durch die Anschläge 20, 21, 22 teilweise begrenzt.

Der Aufnahmeraum 19 dient zum Aufnehmen eines Positionierbauteils 23, an dem das Granuliermesser 15 mittels zwei Fixierelementen 24 befestigt ist. Die Fixierelemente 24 sind als Fixierschrauben ausgebildet. Die Fixierelemente 24 weisen jeweils einen Kopf 25 und ein Gewinde 26 auf. Zur Aufnahme des jeweiligen Gewindes 26 sind in dem Positionierbauteil 23 zugehörige Innengewinde 27 ausgebildet. Die Fixierelemente 24 sind durch zugehörige Fixierdurchgangsöffnungen 28, die in dem Granuliermesser 15 ausgebildet sind, geführt und mittels der Gewinde 26 und der zugehörigen Innengewinde 27 mit dem Positionierbauteil 23 verschraubt, so dass die Fixierelemente 24 mit ihrem jeweiligen Kopf 25 das Granuliermesser 15 an dem Positionierbauteil 23 fixieren. Die Fixierdurchgangsöffnungen 28 sind länglich ausgebildet.

Das Positionierbauteil 23 und das daran befestigte Granuliermesser 15 sind derart in dem Aufnahmeraum 19 angeordnet, dass das Positionierbauteil 23 unmittelbar gegen den ersten Anschlag 20 und den zweiten Anschlag 21 anliegt und das Granuliermesser 15 unmittelbar gegen den dritten Anschlag 22 anliegt. Das Granuliermesser 15 ist somit mittels des ersten Anschlags 20 in einer x-Richtung, mittels des zweiten Anschlags 21 in einer y-Richtung und mittels des dritten Anschlags 22 in einer z-Richtung relativ zu dem Messerarm 16 positioniert. Die x-Richtung, die y-Richtung und die z-Richtung verlaufen jeweils senkrecht zu dem zugehörigen Anschlag 20, 21, 22 bzw. zu den durch die Anschläge 20, 21, 22 gebildeten Flächen. Die Anschläge 20, 21, 22 verlaufen paarweise senkrecht zueinander, so dass die x-Richtung, die y-Richtung und die z-Richtung ein kartesisches Koordinatensystem bilden. Das Granuliermesser 15 ist in der z-Richtung zwischen dem Messerarm 16 und dem Positionierbauteil 23 angeordnet. Zur Aufnahme des jeweiligen Kopfs 25 der Fixierelemente 24 sind im Bereich des dritten Anschlags 22 in dem Messerarm 16 zugehörige Vertiefungen 29 ausgebildet.

Das Positionierbauteil 23 ist mittels eines Befestigungsbauteils 30 an dem Messerarm 16 befestigt. Das Befestigungsbauteil 30 ist gegenüberliegend zu dem Granuliermesser 15 an dem Positionierbauteil 23 mittels Fixierelementen 31 befestigt. Die Fixierelemente 31 sind als Fixierschrauben ausgebildet, die durch das Befestigungsbauteil 30 geführt und mit dem Positionierbauteil 23 verschraubt sind. Das Befestigungsbauteil 30 umfasst einen ersten Abschnitt 32, der gegen das Positionierbauteil 23 anliegt, und einen zweiten Abschnitt 33, der gegen den Messerarm 16 anliegt.

In dem ersten Abschnitt 32 sind entlang der y-Richtung mehrere Durchgangsöffnungen 34 ausgebildet. Das Positionierbauteil 23 und das Granuliermesser 15 weisen entsprechende Durchgangsöffnungen 36, 37 zum Durchführen eines zugehörigen Fixierelements 38 auf. Das jeweilige Fixierelement 38 umfasst einen Kopf 39, einen Mittelabschnitt 40 und einen Gewindeabschnitt 41. Der Kopf 39 des jeweiligen Fixierelements 38 liegt gegen das Befestigungsbauteil 30 an, so dass sich der Mittelabschnitt 40 durch die Durchgangsöffnung 36 des Positionierbauteils 23 und die Durchgangsöffnung 37 des Granuliermessers 15 erstreckt und der Gewindeabschnitt 41 mit einem in dem Messerarm 16 ausgebildeten Innengewinde 42 verschraubt ist. Das jeweilige Innengewinde 42 ist im Bereich des dritten Anschlags 22 ausgebildet. Die jeweilige Durchgangsöffnung 34 sowie der jeweilige Mittelabschnitt 40 sind derart ausgebildet, dass das jeweilige Fixierelement 38 bei einer Vormontage verliersicher von dem Befestigungsbauteil 30 gehalten ist. Die Durchgangsöffnungen 36, 37 weisen einen freien Querschnitt auf, der größer als der Querschnitt des Mittelabschnitts 40 und der Querschnitt des Gewindeabschnitts 41 ist. Mittels der Fixierelemente 38 ist das Positionierbauteil 23 somit im Bereich des Aufnahmeraums 19 an dem Messerarm 16 befestigt.

Entsprechend sind in dem zweiten Abschnitt 33 entlang der y-Richtung mehrere Durchgangsöffnungen 35 ausgebildet. Der zweite Abschnitt 33 ist mittels Fixierelementen 43 an dem Messerarm 16 befestigt. Das jeweilige Fixierelement 43 ist als Fixierschraube ausgebildet. Das jeweilige Fixierelement 43 umfasst einen Kopf 44, einen Mittelabschnitt 45 und einen Gewindeabschnitt 46. Der jeweilige Gewindeabschnitt 46 ist mit einem Innengewinde 47 verschraubt, das in dem Messerarm 16 ausgebildet ist. Das jeweilige Innengewinde 47 erstreckt sich ausgehend von einer jeweiligen Vertiefung 48, die in dem Messerarm 16 ausgebildet ist. Die jeweilige Vertiefung 48 hat einen Querschnitt, der im Vergleich zu einem Querschnitt des Mittelabschnitts 45 und des Gewindeabschnitts 46 größer ist. Die jeweilige Durchgangsöffnung 35 und der zugehörige Mittelabschnitt 45 sind derart ausgebildet, dass das jeweilige Fixierelement 43 bei einer Vormontage von dem Befestigungsbauteil 30 verliersicher gehalten ist.

Zum Justieren des an dem Messerarm 16 befestigten Granuliermessers 15 sind an dem Positionierbauteil 23 mehrere Justierelemente 49 angeordnet. Die Justierelemente 49 sind entlang der y-Richtung, also im Wesentlichen parallel zu einer Schnittkante S des Granuliermessers 15 angeordnet. Die Justierelemente 49 umfassen jeweils einen Gewindeabschnitt 50 und einen Betätigungsabschnitt 51. Das Positionierbauteil 23 umfasst für jedes Justierelement 49 eine Durchgangsbohrung 53. In der jeweiligen Durchgangsbohrung 53 ist über deren gesamter Länge ein Innengewinde 52 ausgebildet. Der jeweilige Gewindeabschnitt 50 ist mit dem Innengewinde 52 verschraubt, so dass das Justierelement 49 mit einem Justieranschlag 54 gegen das Granuliermesser 15 anliegt. Der Justieranschlag 54 ist durch Verdrehen des Justierelements 49 in der z-Richtung verstellbar. Zum Verdrehen des Justierelements 49 dient der Betätigungsabschnitt 51. Der jeweilige Betätigungsabschnitt 51 umfasst beispielsweise einen Innensechskant. Das jeweilige Justierelement 49 umfasst zur Sicherung eine Kontermutter 51'.

Das Granuliermesser 15' ist in entsprechender Weise an einem Positionierbauteil 23 ` befestigt und mittels eines ersten Anschlags 20', eines zweiten Anschlags 21' und eines dritten Anschlags 22` in einem Aufnahmeraum 19` positioniert. Die Anschläge 20', 21' und 22` begrenzen den Aufnahmeraum 19` in entsprechender Weise in einer zugehörigen x-Richtung, einer y-Richtung und einer z-Richtung. Das Positionierbauteil 23 ` mit dem daran befestigten Granuliermesser 15` ist entsprechend mit einem Befestigungsbauteil 30` an dem Messerarm 16' befestigt und das Granuliermesser 15' mittels Justierelementen 49` justierbar bzw. positionierbar.

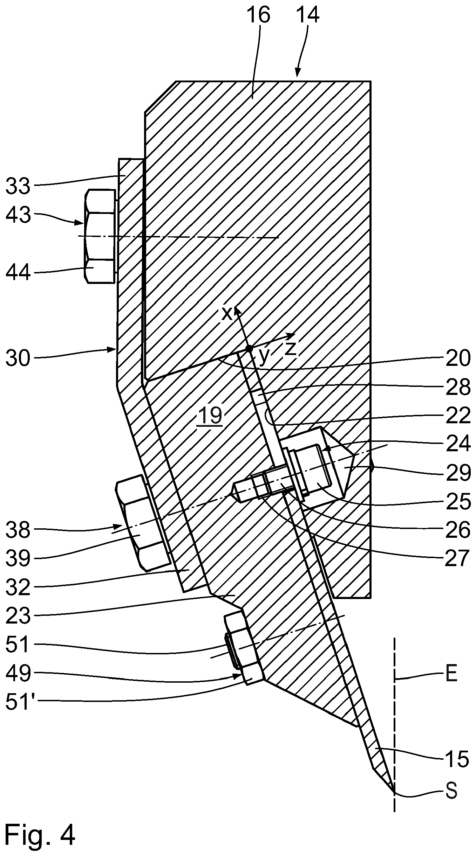

Die Lochplatte 2 definiert in Abhängigkeit von einem gewünschten Abstand zu den Schnittkanten S der Granuliermesser 15, 15' eine Schnittebene E. Die Schnittebene E ist in Fig. 4 veranschaulicht. Der jeweilige Aufnahmeraum 19, 19' ist an einer Seite des Messerträgers 14 bzw. der Messerarme 16, 16' ausgebildet, die der Schnittebene E abgewandt ist. In entsprechender Weise sind die Befestigungsbauteile 30, 30` und die Justierelemente 49, 49` an der der Schnittebene E abgewandten Seite des Messerträgers 14 angeordnet. Hierdurch können die Granuliermesser 15, 15' in einfacher Weise gewechselt bzw. montiert, justiert und/oder demontiert werden.

Nachfolgend ist die Montage des Granuliermessers 15 an dem Messerarm 16 sowie die Positionierung der Schnittkante S des Granuliermessers 15 in der Schnittebene E im Detail beschrieben. Zunächst wird mittels einer Montagevorrichtung 55 eine vormontierte Messereinheit 56 hergestellt.

Die Montagevorrichtung 55 umfasst einen Grundkörper 57, der einen ersten Abschnitt 58, einen vergleichsweise höheren zweiten Abschnitt 59 und einen L-förmigen dritten Abschnitt 60 umfasst. Der zweite Abschnitt 59 und der dritte Abschnitt 60 sind gegenüberliegend zu dem ersten Abschnitt 58 angeordnet. Der dritte Abschnitt 60 ist im Wesentlichen senkrecht zu dem ersten Abschnitt 58 angeordnet, so dass der dritte Abschnitt 60 einen ersten Montageanschlag 61 ausbildet. Zwischen dem ersten Montageanschlag 61 und dem ersten Abschnitt 58 ist eine Durchgangsnut 62 ausgebildet, die nach einer Seite hin offen ist. An dem ersten Abschnitt 58 ist ein zweiter Montageanschlag 63 befestigt. Der zweite Montageanschlag 63 ist beispielsweise als Passstift ausgebildet. Der zweite Abschnitt 59 weist zu dem ersten Abschnitt 58 hin eine Schräge 64 auf. Im Bereich der Schräge 64 sind dritte Montageanschläge 65 angeordnet. Die dritten Montageanschläge 65 sind senkrecht zu der Schräge 64 verstellbar. Hierzu sind die dritten Montageanschläge 65 endseitig an Anschlagelementen 66, beispielsweise Verstellschrauben, ausgebildet. An dem zweiten Abschnitt 59 ist eine Leiste 67 befestigt, die zu dem ersten Montageanschlag 61 hin einen vierten Montageanschlag 68 ausbildet. Zur exakten Ausrichtung des vierten Montageanschlags 68 ist die Leiste 67 mittels Nuten 70 und Schrauben 71 verstellbar. In dem ersten Abschnitt 58 ist eine Längsnut 69 ausgebildet, die entsprechend der Durchgangsnut 62 nach einer Seite hin offen ist.

Zur Vormontage der Messereinheit 56 werden zunächst die Fixierelemente 38 und 43 verliersicher in den Durchgangsöffnungen 34, 35 des Befestigungsbauteils 30 angeordnet. Die Justierelemente 49 werden in den zugehörigen Durchgangsbohrungen 53 des Positionierbauteils 23 verschraubt. Anschließend wird das Befestigungsbauteil 30 mit den Fixierelementen 31 mit dem Positionierbauteil 23 verschraubt. Die Fixierelemente 38 werden hierbei durch die Durchgangsöffnungen 36 geführt. Das Positionierbauteil 23 und das daran befestigte Befestigungsbauteil 30 werden daraufhin derart in der Montagevorrichtung 55 angeordnet, dass die dem Befestigungsbauteil 30 gegenüberliegende Seite des Positionierbauteils 23 frei zugänglich ist. Hierzu wird das Befestigungsbauteil 30 zwischen den Fixierelementen 38 und 43 in die Durchgangsnut 62 eingeführt, so dass sich die Fixierelemente 38 in der Längsnut 69 befinden und das Positionierbauteil 23 gegen den ersten Montageanschlag 61 und gegen die dritten Montageanschläge 65 anliegt. Das Einführen wird gestoppt, wenn das Befestigungsbauteil 30 und/oder das Positionierbauteil 23 gegen den zweiten Montageanschlag 63 anliegt.

In dieser Position wird das Granuliermesser 15 derart auf dem Positionierbauteil 23 angeordnet, dass das Granuliermesser 15 gegen den einstellbaren vierten Montageanschlag 68 anliegt. Beim Anordnen des Granuliermessers 15 werden die Fixierelemente 38 durch die Durchgangsöffnungen 37 geführt. Anschließend wird das Granuliermesser 15 in der ausgerichteten Position mittels der Fixierelemente 24 an dem Positionierbauteil 23 befestigt. Die Vormontage der Messereinheit 56 ist damit abgeschlossen. Die vormontierte Messereinheit 56 wird seitlich aus der Durchgangsnut 62 und der Längsnut 69 und somit aus der Montagevorrichtung 55 entnommen.

Die vormontierte Messereinheit 56 wird anschließend mittels der Fixierelemente 38, 43 an dem Messerarm 16 befestigt, wodurch das Granuliermesser 15 und das Positionierbauteil 23 in dem Aufnahmeraum 19 angeordnet werden und durch Anliegen gegen die Anschläge 20, 21 und 22 positioniert werden. Das Granuliermesser 15 bzw. die Schnittkante S ist hierdurch in einer ersten Position positioniert. In der ersten Position liegt die Schnittkante S im Wesentlichen in der Schnittebene E.

Anschließend wird die Schnittkante S mittels der Justierelemente 49 exakt in der Schnittebene E positioniert. Durch Verdrehen der einzelnen Justierelemente 51 kann die Schnittkante S somit entlang der y-Richtung durch Verbiegen des Granuliermessers 15 exakt in der Schnittebene E positioniert werden.

Das Granuliermesser 15', das Positionierbauteil 23', das Befestigungsbauteil 30` und die Justierelemente 49` werden mittels der Montagevorrichtung 55 in entsprechender Weise zu einer Messereinheit 56` vormontiert.

Durch die Vormontage der Messereinheiten 56, 56` wird die Stillstandzeit der Granuliervorrichtung 1 und des daran angeschlossenen Extruders verringert. Die Stillstandzeit wird darüber hinaus durch die einfache Montage der Messereinheiten 56, 56` an dem Messerträger 14 reduziert. Durch das Befestigen der Messereinheiten 56, 56'an dem Messerträger 14 mittels der Fixierelemente 38, 43 wird das jeweilige Granuliermesser 15, 15' bereits grobpositioniert, so dass anschließend lediglich noch eine exakte Positionierung bzw. Justierung der Schnittkanten S in der Schnittebene E mittels der Justierelemente 49, 49` erfolgen muss. Dadurch, dass der jeweilige Aufnahmeraum 19, 19' der Schnittebene E abgewandt ist, können die Messereinheiten 56, 56` von der Seite montiert und die Granuliermesser 15, 15' von der Seite justiert werden, die der aufgeheizten Lochplatte 2 abgewandt ist. Hierdurch ist die Montage und Einstellung der Granuliermesser 15, 15' einfach und bedienerfreundlich möglich. Da das Justieren mittels der Justierelemente 49, 49` nach dem Fixieren der Messereinheiten 56, 56` mittels der Fixierelemente 38, 43 an dem Messerträger 14 erfolgt, wird das Einstellen der Granuliermesser 15, 15' nicht von einem nachträglichen Befestigen beeinträchtigt. Die Einstellung der Granuliermesser 15, 15' ist somit exakt möglich.

## Patentansprüche

1. Messerkopf zur Granulierung von Materialsträngen umfassend
- einen Messerträger (14),
- mindestens ein an dem Messerträger (14) befestigtes Granuliermesser (15, 15'), und
- mindestens ein Justierelement (49, 49'), das zur Feinpositionierung gegen das jeweilige Granuliermesser (15, 15') anliegt,
**dadurch gekennzeichnet,**
**dass** das jeweilige Granuliermesser (15, 15') an einem Positionierbauteil (23, 23') vormontiert und befestigt ist,
**dass** das jeweilige Positionierbauteil (23, 23') zur Grobpositionierung des Granuliermessers (15, 15') in einer x-Richtung und in einer y-Richtung gegen den Messerträger (14) anliegt, und
**dass** das mindestens eine Justierelement (49, 49`) in einer z-Richtung verstellbar ist.

2. Messerkopf nach Anspruch 1, **dadurch gekennzeichnet,**
**dass** der Messerträger (14) zum Aufnehmen des jeweiligen Positionierbauteils (23, 23') einen Aufnahmeraum (19, 19') ausbildet.

3. Messerkopf nach Anspruch 1 oder 2, **dadurch gekennzeichnet,**
**dass** ein Aufnahmeraum (19, 19') zum Aufnehmen des jeweiligen Positionierbauteils (23, 23') durch einen ersten Anschlag (20, 20'), einen zweiten Anschlag (21, 21') und einen dritten Anschlag (22, 22`) teilweise begrenzt ist.

4. Messerkopf nach mindestens einem der vorangegangenen Ansprüche,
**dadurch gekennzeichnet,**
**dass** das mindestens eine Justierelement (49, 49`) verstellbar an dem jeweiligen Positionierbauteil (23, 23 `) befestigt ist.

5. Messerkopf nach mindestens einem der vorangegangenen Ansprüche,
**dadurch gekennzeichnet,**
**dass** in dem jeweiligen Granuliermesser (15, 15 `) mindestens zwei Fixierdurchgangsöffnungen (28) ausgebildet sind und das jeweilige Granuliermesser (15, 15') mittels mindestens zwei Fixierelementen (24), die sich durch die mindestens zwei Fixierdurchgangsöffnungen (28) erstrecken, an dem Positionierbauteil (23, 23 `) befestigt ist.

6. Messerkopf nach mindestens einem der vorangegangenen Ansprüche,
**dadurch gekennzeichnet,**
**dass** das jeweilige Granuliermesser (15, 15') zwischen dem Positionierbauteil (23, 23 `) und dem Messerträger (14) angeordnet ist.

7. Messerkopf nach mindestens einem der vorangegangenen Ansprüche,
**dadurch gekennzeichnet,**
**dass** in dem Messerträger (14) mindestens eine Vertiefung (29) zum teilweisen Aufnehmen der mindestens zwei Fixierelemente (24) ausgebildet ist.

8. Messerkopf nach mindestens einem der vorangegangenen Ansprüche,
**dadurch gekennzeichnet,**
**dass** das jeweilige Positionierbauteil (23, 23 `) an dem Messerträger (14) befestigt ist, insbesondere im Bereich eines Aufnahmeraums (19, 19') und/oder außerhalb eines Aufnahmeraums (19, 19') zum Aufnehmen des Positionierelements (23, 23 `).

9. Messerkopf nach mindestens einem der vorangegangenen Ansprüche,
**dadurch gekennzeichnet,**
**dass** das jeweilige Positionierbauteil (23, 23') mittels eines Befestigungsbauteils (30, 30') an dem Messerträger (14) befestigt ist.

10. Messerkopf nach mindestens einem der vorangegangenen Ansprüche,
**dadurch gekennzeichnet,**
**dass** der Messerträger (14) mindestens zwei Messerarme (16, 16') zur Befestigung von Granuliermessern (15, 15') und einen Lagerabschnitt (17) zur drehbaren Lagerung der mindestens zwei Messerarme (16, 16') umfasst, wobei die mindestens zwei Messerarme (16, 16') insbesondere einteilig mit dem Lagerabschnitt (17) ausgebildet sind.

11. Granuliervorrichtung zur Granulierung von Materialsträngen umfassend
- eine Lochplatte (2) zur Erzeugung von Materialsträngen,
- einen Messerkopf (3) nach mindestens einem der vorangegangenen Ansprüche, der zur Erzeugung von Granulat aus den Materialsträngen an einer stromabwärtigen Seite der Lochplatte (2) angeordnet ist, und
- eine Antriebseinrichtung (5) zum Drehantreiben des Messerkopfes (3) um eine Drehachse (6).

12. Verfahren zur Montage eines Messerkopfs nach mindestens einem der Ansprüche 1 bis 10 mit den Schritten:
- Bereitstellen eines Messerträgers (14),
- Vormontieren und Befestigen eines Granuliermessers (15, 15') an einem Positionierbauteil (23, 23'),
- Befestigen des Positionierbauteils (23, 23') mit dem vormontierten und befestigten Granuliermesser (15, 15') an dem Messerträger (14) derart, dass das Positionierbauteil (23, 23') in einer x-Richtung und in einer y-Richtung gegen den Messerträger (14) anliegt und das Granuliermesser (15, 15') eine erste Position relativ zu dem Messerträger (14) einnimmt, und
- Justieren des Granuliermessers (15, 15') mittels mindestens eines Justierelements (49, 49') durch Verstellen des mindestens einen Justierelements (49, 49') in einer z-Richtung derart, dass das Granuliermesser (15, 15') eine zweite Position relativ zu dem Messerträger (14) einnimmt.

## Claims

1. Blade head for granulating strands of material, comprising
- a blade carrier (14),
- at least one granulating blade (15, 15') which is fastened to the blade carrier (14), and
- at least one adjusting element (49, 49'), which bears against the respective granulating blade (15, 15') for fine positioning purposes,
**characterized**
**in that** the respective granulating blade (15, 15') is pre-assembled and fastened to a positioning component (23, 23'),
**in that** the respective positioning component (23, 23') bears against the blade carrier (14) in an x direction and in a y direction for the rough positioning of the granulating blade (15, 15'), and
**in that** the at least one adjusting element (49, 49') is adjustable in a z direction.

2. Blade head according to Claim 1, **characterized**
**in that** the blade carrier (14) forms a receiving space (19, 19') for receiving the respective positioning component (23, 23').

3. Blade head according to Claim 1 or 2, **characterized**
**in that** a receiving space (19, 19') for receiving the respective positioning component (23, 23') is delimited in part by a first stop (20, 20'), a second stop (21, 21') and a third stop (22, 22').

4. Blade head according to at least one of the preceding claims, **characterized**
**in that** the at least one adjusting element (49, 49') is fastened to the respective positioning component (23, 23') in an adjustable manner.

5. Blade head according to at least one of the preceding claims, **characterized**
**in that** at least two fixing through-openings (28) are formed in the respective granulating blade (15, 15') and the respective granulating blade (15, 15') is fastened to the positioning component (23, 23') by means of at least two fixing elements (24) which extend through the at least two fixing through-openings (28).

6. Blade head according to at least one of the preceding claims, **characterized**
**in that** the respective granulating blade (15, 15') is arranged between the positioning component (23, 23') and the blade carrier (14).

7. Blade head according to at least one of the preceding claims, **characterized**
**in that** at least one recess (29) for partially receiving the at least two fixing elements (24) is formed in the blade carrier (14).

8. Blade head according to at least one of the preceding claims, **characterized**
**in that** the respective positioning component (23, 23') is fastened to the blade carrier (14), in particular in the region of a receiving space (19, 19') and/or outside of a receiving space (19, 19') for receiving the positioning element (23, 23').

9. Blade head according to at least one of the preceding claims, **characterized**
**in that** the respective positioning component (23, 23') is fastened to the blade carrier (14) by means of a fastening component (30, 30').

10. Blade head according to at least one of the preceding claims, **characterized**
**in that** the blade carrier (14) comprises at least two blade arms (16, 16') for the fastening of granulating blades (15, 15') and a bearing portion (17) for the rotatable mounting of the at least two blade arms (16, 16'), wherein the at least two blade arms (16, 16') are formed in particular in one part with the bearing portion (17).

11. Granulating apparatus for granulating strands of material, comprising
- a perforated plate (2) for generating strands of material,
- a blade head (3) according to at least one of the preceding claims, which is arranged on a downstream side of the perforated plate (2) for the purpose of generating a granulate from the strands of material, and
- a drive device (5) for rotationally driving the blade head (3) about an axis of rotation (6).

12. Method for assembling a blade head according to at least one of claims 1 to 10, having the steps of:
- providing a blade carrier (14),
- pre-assembling and fastening a granulating blade (15, 15') to a positioning component (23, 23'),
- fastening the positioning component (23, 23') with the pre-assembled and fastened granulating blade (15, 15') to the blade carrier (14) in such a way that the positioning component (23, 23') bears against the blade carrier (14) in an x direction and in a y direction and the granulating blade (15, 15') takes a first position relative to the blade carrier (14), and
- adjusting the granulating blade (15, 15') by means of at least one adjusting element (49, 49') by adjusting the at least one adjusting element (49, 49') in a z direction in such a way that the granulating blade (15, 15') takes a second position relative to the blade carrier (14).

## Revendications

1. Tête de lame destinée à la granulation de brins de matière comprenant
- un porte-lame (14),
- au moins une lame de granulation (15, 15') fixée sur le porte-lame (14), et
- au moins un élément d'ajustement (49, 49') qui s'applique contre la lame de granulation respective (15, 15') pour un positionnement fin,
**caractérisée**
**en ce que** la lame de granulation respective (15, 15') est prémontée et fixée sur un composant de positionnement (23, 23'),
**en ce que** le composant de positionnement respectif (23, 23') pour le positionnement grossier de la lame de granulation (15, 15') s'applique dans une direction x et dans une direction y contre le porte-lame (14), et
**en ce que** ledit au moins un élément d'ajustement (49, 49') est réglable dans une direction z.

2. Tête de lame selon la revendication 1, **caractérisée**
**en ce que** le porte-lame (14) forme un espace de réception (19, 19') pour recevoir le composant de positionnement (23, 23') respectif.

3. Tête de lame selon la revendication 1 ou 2, **caractérisée**
**en ce qu'**un espace de réception (19, 19') destiné à recevoir le composant de positionnement respectif (23, 23') est partiellement limité par une première butée (20, 20'), une deuxième butée (21, 21') et une troisième butée (22, 22').

4. Tête de lame selon au moins l'une des revendications précédentes, **caractérisée**
**en ce que** ledit au moins un élément d'ajustement (49, 49') est fixé de manière réglable sur le composant de positionnement respectif (23, 23').

5. Tête de lame selon au moins l'une des revendications précédentes, **caractérisée**
**en ce qu'**au moins deux ouvertures de passage de fixation (28) sont formées dans la lame de granulation respective (15, 15') et la lame de granulation respective (15, 15') est fixée au composant de positionnement (23, 23') au moyen d'au moins deux éléments de fixation (24) qui s'étendent à travers les au moins deux ouvertures de passage de fixation (28).

6. Tête de lame selon au moins l'une des revendications précédentes, **caractérisée**
**en ce que** la lame de granulation respective (15, 15') est disposée entre le composant de positionnement (23, 23') et le porte-lame (14).

7. Tête de lame selon au moins l'une des revendications précédentes, **caractérisée**
**en ce qu'**au moins un renfoncement (29) est formé dans le porte-lame (14) pour recevoir partiellement les au moins deux éléments de fixation (24).

8. Tête de lame selon au moins l'une des revendications précédentes, **caractérisée**
**en ce que** le composant de positionnement respectif (23, 23') est fixé sur le porte-lame (14), en particulier dans la zone d'un espace de réception (19, 19') et/ou à l'extérieur d'un espace de réception (19, 19') pour recevoir le composant de positionnement (23, 23').

9. Tête de lame selon au moins l'une des revendications précédentes, **caractérisée**
**en ce que** le composant de positionnement respectif (23, 23') est fixé sur le porte-lame (14) au moyen d'un composant de montage (30, 30').

10. Tête de lame selon au moins l'une des revendications précédentes, **caractérisée**
**en ce que** le porte-lame (14) comprend au moins deux bras de lames (16, 16') pour la fixation de lames de granulation (15, 15') et une section de palier (17) pour le montage rotatif des au moins deux bras de lames (16, 16'), les au moins deux bras de lames (16, 16') étant réalisés en particulier d'une seule pièce avec la section de palier (17).

11. Dispositif de granulation pour la granulation de brins de matière comprenant
- une plaque perforée (2) pour la production de brins de matière,
- une tête de lame (3) selon au moins l'une quelconque des revendications précédentes, qui est disposée sur un côté aval de la plaque perforée (2) pour produire des granulés à partir des brins de matière, et
- un dispositif d'entraînement (5) pour entraîner en rotation la tête de lame (3) autour d'un axe de rotation (6).

12. Procédé de montage d'une tête de lame selon au moins l'une des revendications 1 à 10 comprenant les étapes suivantes :
- mise à disposition d'un porte-lame (14),
- prémontage et fixation d'une lame de granulation (15, 15') sur un composant de positionnement (23, 23'),
- montage du composant de positionnement (23, 23') avec la lame de granulation (15, 15') prémontée et fixée sur le porte-lame (14) de telle sorte que le composant de positionnement (23, 23') s'applique dans une direction x et dans une direction y contre le porte-lame (14) et que la lame de granulation (15, 15') prenne une première position par rapport au porte-lame (14), et
- ajustement de la lame de granulation (15, 15') au moyen d'au moins un élément d'ajustement (49, 49') en déplaçant ledit au moins un élément d'ajustement (49, 49') dans une direction z de telle sorte que la lame de granulation (15, 15') prenne une deuxième position par rapport au porte-lame (14).
